Europäisches Patentamt

European Patent Office

Office européen des brevets

(11) Publication number: **0 628 974 A2**

## EUROPEAN PATENT APPLICATION

(21) Application number: **94107673.9**

(51) Int. Cl.5: **H01C 17/06**

(22) Date of filing: **18.05.94**

(30) Priority: **07.06.93 US 71883**

(43) Date of publication of application:
**14.12.94 Bulletin 94/50**

(84) Designated Contracting States:
**DE FR GB**

(71) Applicant: **E.I. DU PONT DE NEMOURS &
COMPANY INCORPORATED
1007 Market Street
Wilmington Delaware 19898 (US)**

(72) Inventor: **Borland, William
106 Turquoise Creek Drive
Cary, North Carolina 27513 (US)**
Inventor: **Bouchard, Robert Joseph
20 Crestfield Road
Wilmington, Delaware 19810 (US)**
Inventor: **Hayakawa, Keiichiro
3-17-12-602 Take
Yokosuka-shi, Kanagawa-ken 238-03 (JP)**
Inventor: **Matsuno, Hisashi**

**4-16-13-302 Ogawa
Machida-shi, Tokyo 194 (JP)**
Inventor: **Pfeiffer, Thomas
Erleneweg 14
D-63303 Dreieich (DE)**
Inventor: **Smith, Jerome David
103 Muscadine Court
Cary, North Carolina 27513 (US)**
Inventor: **Walker III, Alfred Thomas
10901 Street Road
Oxford, Pennsylvania 19363 (US)**
Inventor: **Sato, Takeshi
1-36-18 Sakura-Shin-Machi
Setagaya-ku, Tokyo No. 154 (JP)**

(74) Representative: **von Kreisler, Alek,
Dipl.-Chem. et al
Patentanwälte
von Kreisler-Selting-Werner
Postfach 10 22 41
D-50462 Köln (DE)**

(54) **Thick film resistor composition.**

(57) The object is to provide a thick film resistor composition which has high voltage endurance characteristics typified by electrostatic discharge (ESD), and controllable values of resistance and TCR. A thick film resistor composition containing 5-25 wt. % of divided solids of a ruthenium oxide as a conducting component and 30-70 wt. % of glass as an inorganic binder, the divided solid of ruthenium oxide either having an average specific surface area of 30 $m^2$/g or more and an average crystallite size of 160 angstroms or more, or having an average specific surface area of 18 $m^2$/g or more but less than 30 $m^2$/g and an average crystallite size of 220 angstroms or more.

## FIELD OF THE INVENTION

This invention relates to a composition useful for producing a thick film resistor, and specifically to a composition using a ruthenium oxide as a conducting component.

## BACKGROUND OF THE INVENTION

A thick film resistor composition widely used in thick film resistor electrical parts, thick film hybrid circuits, etc. are compositions for preparing a resistor thick film by printing the composition on a conductor pattern or electrodes formed on the surface of an insulating substrate, followed by calcining the print.

The thick film resistor composition is prepared by dispersing a conducting component and an inorganic binder in an organic medium (vehicle). The conducting component plays a principal role of determining the electrical properties of the thick film resistor, and a ruthenium oxide or the like is used as this component. The inorganic binder comprises glass, and has a major role of retaining the thick film integrally and binding it to the substrate. The organic medium is a dispersing medium that affects the application properties, particularly rheology, of the composition.

When a thick film resistor composition using a ruthenium oxide as the conducting component is to be used for a hybrid microelectronic circuit or a chip resistor, it is important that the electric stability of the resistor be high, and especially its electrostatic discharge {ESD) be small. This is of particular importance when the composition is to be put to vehicle uses, namely, ignition equipment on automobiles.

A considerably high voltage, e.g., 10-20 kV, as in a spark, may be applied to the circuit of the ignition equipment of an automobile. ESD serves as an indicator of the voltage endurance of the resistor against this high voltage. This parameter is expressed as % change in the value of resistance before and after the application of a static electricity of a certain voltage. So far, the ESD of the thick film resistor for automobiles is evaluated based on the values before and after the application of 5 kV. In recent years, however, voltage endurance under a higher voltage load such as 25 kV has been required. Thus, there has been a demand for a small ESD not only at 5 kV, but also at 25 kV.

The voltage endurance of the thick film resistor can be controlled to some extent by varying the proportion of the ruthenium oxide in the resistor. However, a desired resistance may not be obtained, or the surface condition of the calcined product may be deteriorated. To make up for this drawback, or to control voltage endurance without varying the proportion of the ruthenium oxide in the thick film resistor, it is possible to vary the formulation of glass as the inorganic binder in the resistor. A varied formulation of glass however, may aggravate the length effect of the temperature coefficient of resistance (TCR), or may increase changes in the resistance and TCR due to calcination with overcoat glass.

It has been attempted to improve the voltage endurance and the surface condition of the thick film resistor by changing the kind of the ruthenium oxide. Ruthenium oxides are classified by the magnitude of their average specific surface areas, and a larger specific surface area provides a better ESD. Thus, the use of the ruthenium oxide with a larger specific surface area improves the ESD. Even if the ESD could be improved, however, the problem may arise that the desired value of resistance is not obtained, or the TCR exceeds the permissible range. Hence, a thick film resistor composition with a good ESD and controllable values of resistance and TCR is desired.

In the thick film resistor for automobiles, moreover, it is important that the calcined surface (cosmetic) be smooth. The surface condition of the calcined thick film resistor does not affect appearance alone; a rough surface tends to deteriorate various electrical characteristics as a whole, and result in greater variations.

## SUMMARY OF THE INVENTION

A first object of the present invention is to provide a thick film resistor composition with high voltage endurance characteristics typified by ESD and controllable values of resistance and TCR. A second object of the present invention is to provide a thick film resistor composition capable of providing a thick film resistor with a smooth surface condition in addition to the above-mentioned properties.

These objects are attained by a thick film resistor composition containing 5-25 wt. % of divided solids of a ruthenium oxide as a conducting component and 30-70 wt. % of glass as an inorganic binder, in which the divided solids of ruthenium oxide either have an average specific surface area of 30 $m^2$/g or more and an average crystallite size of 160 angstroms or more, or have an average specific surface area of 18 $m^2$/g or more but less than 30 $m^2$/g and an average crystallite size of 2 angstroms or more; as well as the thick film resistor composition, in which the divided solids of ruthenium oxide have an average specific surface

area of 30 $m^2$/g or more and an average crystallite size of 250 angstroms or more.

The present invention will be described in more detail below.

BRIEF DESCRIPTION OF THE DRAWINGS

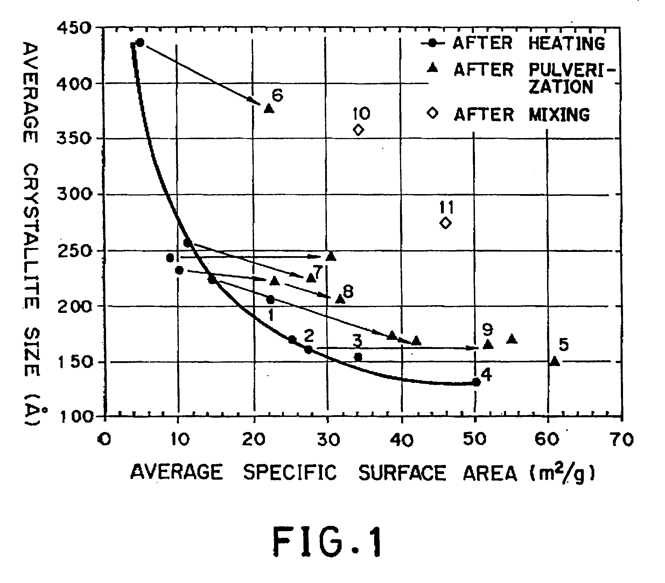

Fig. 1 shows the relationships between the average specific surface areas and the average crystallite sizes of ruthenium oxides produced in Examples 1 to 11.

DETAILED DESCRIPTION OF THE INVENTION

The present inventors have found that the electrical characteristics, such as voltage endurance, and the surface condition of a thick film resistor composition containing a ruthenium oxide as a conducting component are not affected only by the specific surface area of the ruthenium oxide, but that the crystallite size of the ruthenium oxide also affects these properties. These findings have led us to accomplish the present invention.

The present invention is characterized in that an attention has been paid to the average crystallite sizes of ruthenium oxides so far classified only by the average specific surface areas, and a ruthenium oxide with particular values of average specific surface area and average crystallite size is used. The inventors have found that when the specific surface area is constant, the resistance and TCR of the thick film resistor are in a nearly linear relationship with the change of the crystallite size, and that when the crystallite size is constant, these parameters are in a nearly linear relationship with the change of the specific surface area. In the light of these relationships, the inventors have selected appropriate values of average specific surface area and average crystallite size within.the scope of the present invention, thereby making it possible to obtain a thick film resistor compositions with a satisfactory ESD and desired resistance and TCR.

The inventors have also found that even when the specific surface areas of ruthenium oxides are the same, the surface condition of the resulting thick-film resistor varies depending on the crystallite size, thus enabling the thick film resistor to be obtained with a satisfactory ESD and a smooth surface condition.

Thus, the use of a ruthenium oxide with two parameters, average specific surface area and crystallite size, restricted to specific ranges according to the present invention makes it possible to control the properties of the thick film resistor.

The average specific surface area of the divided solids of a ruthenium oxide as used in the present invention refers to the average specific surface area of the divided solids of the ruthenium oxide as measured by the B.E.T. monadic test using a surface area measuring device of QUANTA CHROME.

Next, the average crystallite size of the divided solids of the ruthenium oxide will be described. The divided solids of the ruthenium oxide comprise many particles, each of which is generally polycrystalline and is composed of plural crystals. Crystallites refer to individual crystals, and the crystallite sizes mean the diameters of these crystallites. The average crystallite size of the divided solids of the ruthenium oxide is determined by measuring the half-widths of the peaks of the representative four crystal surfaces of the ruthenium oxide, (110), (101), (211) and (220), by means of an X-ray diffractometer, and making a calculation from the results. The calculation is made theoretically using Rigaku's calculation software "Size and lattice distortion of crystallites." These measurements and calculations use Scherrer's equation, and their details are offered in "A Handbood of X-Ray Diffraction" published by Rigaku.

A more detailed explanation will be offered for the constituents of the thick film resistor composition of the present invention.

The divided solids of the ruthenium oxide contained as a conducting component in the thick film resistor composition of the present invention are ones either having an average specific surface area of 30 $m^2$/g or more and an average crystallite size of 160 angstroms or more, or having an average specific surface area of 18 $m^2$/g or more but less than 30 $m^2$/g and an average crystallite size of 220 angstroms or more.

The preferred divided solids of the ruthenium oxide for use in the present invention are ones having an average specific surface area of 30 $m^2$/g or more and an average crystallite size of 250 angstroms or more. When the ruthenium oxide with both parameters within this range is used, there can be obtained a thick film resistor satisfactory not only in electrical characteristics such as ESD, but also in surface condition. Examples of such solids of ruthenium oxide include those containing, based on 100 wt. % of the whole divided solids of ruthenium oxide, 30-70 wt. % of solids of ruthenium oxide with specific surface areas of 30 $m^2$/g or less and crystallite sizes of 350 angstroms or more, and 70-30 wt. % of solids of ruthenium oxide with specific surface areas of 50 $m^2$/g or more and crystallite sizes of 250 angstroms or less; or a mixture of 30-70 wt. % of first solids of ruthenium oxide with an average specific surface area of 30 $m^2$/g or less and an average crystallite size of 350 angstroms or more, and 70-30 wt. % of second solids of ruthenium oxide with an average specific surface area of 50 $m^2$/g or more and an average crystallite size of 250 angstroms or less. The preferred first solids of ruthenium oxide are ones with an average specific surface area of 30 $m^2$/g or less and an average crystallite size of 350 angstroms or more. The preferred second solids of ruthenium oxide are ones with an average specific surface area of 50 $m^2$/g or more and an average crystallite size of 200 angstroms or less. The preferred proportions of the first solids of ruthenium oxide and the second solid of ruthenium oxide are 60-70 wt. % for the first solids of ruthenium oxide and 30-40 wt. % for the second solids of ruthenium oxide, based on 100 wt. % of the whole divided solids of ruthenium oxide in the thick film resistor composition.

The divided solids of ruthenium oxide for use in the present invention can be obtained by mixing the first solids of ruthenium oxide and the second solids of ruthenium oxide that have been produced separately, but the way of obtaining them is in no way limited to the mixing. A ruthenium oxide with an average specific surface area of 30 $m^2$/g or more and an average crystallite size of 250 angstroms or more may be directly produced from a suitable ruthenium oxide material, and used for the invention. Alternatively, a product containing the first solids of ruthenium oxide and the second solids of ruthenium oxide may be produced directly from a ruthenium oxide material by a suitable method, and used for the invention.

Such various solids of ruthenium oxide with varying specific surface areas and crystallite sizes can be produced, for example, by heating and pulverizing the ruthenium oxide material.

When the ruthenium oxide material is heated, as the sintering of the ruthenium oxide proceeds, crystallites gradually grow, making the average crystallite size larger and the average specific surface area smaller. In this case, if the heating temperature and the heating time are selected, various solids of ruthenium oxide with different average crystallite sizes and different average specific surface areas can be produced from the same ruthenium oxide material. For instance, when ruthenium oxide with an average specific surface area of about 50 $m^2$/g and an average crystallite size of about 133 angstroms is heated for about 2 hours at about 600°C, the average crystallite size gradually increases, while the average specific surface area gradually decreases, whereby solids of ruthenium oxide with an average specific surface area of about 5.5 $m^2$/g and an average crystallite size of about 440 angstroms are obtained as the final product. By adjusting the heating temperature within the range of from 300 to 600°C and the heating time within the range of from about 1 to 2 hours, there can be produced various solids of ruthenium oxide having average crystallite sizes and average specific surface areas intermediate between the starting material and the final product.

When the thus heat-treated ruthenium oxide is pulverized, the average specific surface area increases and the average crystallite size decrease. By selecting the specific surface areas and crystallite sizes of the solids before pulverization, or by selecting the pulverization conditions such as the pulverizing time, there can be produced various solids of ruthenium oxide with different average crystallite sizes and different average specific surface areas. The combination of heat treatment and pulverization in this manner enables the production of solids of ruthenium oxide having the desired average crystallite size and average specific surface area.

As the solids of ruthenium oxide for use in the present invention, it is preferred to use products obtained by methods such as heating and pulverization as mentioned above, however, the methods available for the invention are in no way restricted thereto.

The divided solids of ruthenium oxide in the thick film resistor composition of the present invention are used in a proportion of 5-25 wt. % preferably 10-20 wt. %, based on the total weight as the composition containing the organic medium. If based on the total content of the inorganic solids, that proportion is 7-35 wt. %, preferably 15-30 wt. %. The total content of the inorganic solids refers to the total amount of the conducting component and the inorganic binder. In case the composition of the present invention contains an inorganic additive in addition to the conducting component and the inorganic binder, the total content of the inorganic solids is taken to contain the inorganic additive.

The thick film resistor composition of the present invention may contain, as the conducting component, ruthenium pyrochlore oxides in addition to ruthenium oxide. The ruthenium pyrochlore oxides are kinds of pyrochlore oxides which are multi-component compounds of $Ru^{+4}$, $Ir^{+4}$ or a mixture of these (M'') expressed by the following general formula:

$$(M_xBi_{2-x})(M'_yM''_{2-y})O_{7-z}$$

wherein

M    is selected from the group consisting of yttrium, thallium, indium, cadmium, lead, copper and rare earth metals,

4

M' is selected from the group consisting of platinum, titanium, chromium, rhodium and antimony,

M'' is ruthenium, iridium or a mixture of these,

x denotes 0 to 2 with the proviso that $x \leq 1$ for monovalent copper,

y denotes 0 to 0.5 with the proviso that when M' is rhodium or two or more of platinum, titanium, chromium, rhodium and antimony, y stands for 0 to 1, and

z denotes 0 to 1 with the proviso that when M is divalent lead or cadmium, z is at least equal to about x/2.

These ruthenium pyrochlore oxides are described in detail in the specification of U.S. Patent 3,583,931.

The preferred ruthenium pyrochlore oxides are bismuth ruthenate ($Bi_2Ru_2O_7$) and lead ruthenate ($Pb_2Ru_2O_6$). These compounds are obtained easily in pure form, are not adversely affected by the glass binder, have a relatively small TCR, are stable even when heated to about 1000 °C in air, and are relatively stable even in a reducing atmosphere. More preferred is lead ruthenate ($Pb_2Ru_2O_6$). Other pyrochlores, $Pb_{1.5}Bi_{0.5}Ru_2O_{6.20}$ and $CdBiRu_2O_{6.5}$ may also be used. y = 0 for all these pyrochlore compounds.

In the present invention, the ruthenium pyrochlore oxide is a finely divided one. There are no restrictions regarding its specific surface area and crystallite size.

The ruthenium pyrochlore oxide is used in a proportion of 0-20 wt. %, preferably 0-15 wt. %, based on the total weight of the composition containing the organic medium. If based on the total content of the inorganic solids, this proportion is 0-30 wt. %, preferably 0-25 wt. %.

Examples of the inorganic binder in the thick film resistor composition of the present invention are various glasses that are generally used for thick film resistor compositions. They include lead silicate glass containing about 23-34 wt. % of $SiO_2$, and lead borosilicate glass containing about 23-34 wt. % of $SiO_2$, about 52-73 wt. % of PbO, and about 4-14 wt. % of $B_2O_3$.

Examples of the formulations for glass that can be used as the inorganic binder in the present invention are shown in Tables 1 and 2. The examples of glass listed in these tables can be produced by an ordinary manufacturing method.

## Table 1

### Glass binder (wt. %)

|  | No. 1 | No. 2 | No. 3 | No. 4 | No. 5 | No. 6 | No. 7 | No. 8 | No. 9 | No. 10 |
|---|---|---|---|---|---|---|---|---|---|---|
| $SiO_2$ | 28.8 | 29.0 | 23.5 | 25.9 | 34.0 | 26.0 | 25.0 | 24.0 | 24.0 | 35.5 |
| $ZrO_2$ |  |  | 4.0 |  |  |  | 4.0 | 4.0 | 2.0 |  |
| $TiO_2$ |  |  |  |  |  |  |  |  | 4.0 |  |
| $B_2O_3$ |  |  | 25.4 | 10.0 |  | 10.0 | 10.0 | 10.0 | 10.0 | 3.1 |
| $Al_2O_3$ |  |  | 6.4 | 2.5 | 1.0 | 2.5 | 1.0 | 2.5 | 2.5 | 1.2 |
| PbO | 71.2 | 69.0 |  | 61.6 | 65.0 | 59.0 | 57.5 | 53.5 | 58.5 | 62.2 |
| BaO |  |  | 1.0 |  |  |  |  |  |  |  |
| CaO |  |  | 4.0 |  |  |  |  |  |  |  |
| ZnO |  |  | 27.2 |  |  |  |  |  |  |  |
| $Li_2O$ |  | 2.0 |  |  |  | 2.0 | 2.0 | 2.0 | 3.0 |  |
| $Na_2O$ |  |  | 8.5 |  |  |  |  |  |  |  |

Table 2

Glass binder (mol %)

|  | No. 1 | No. 2 | No. 3 | No. 4 | No. 5 | No. 6 | No. 7 | No. 8 | No. 9 | No. 10 |
|---|---|---|---|---|---|---|---|---|---|---|
| $SiO_2$ | 60.0 | 56.2 | 28.0 | 49.3 | 65.4 | 46.4 | 45.0 | 41.8 | 42.3 | 62.5 |
| $ZrO_2$ |  |  | 2.4 |  |  |  | 3.6 | 3.5 | 1.7 |  |
| $TiO_2$ |  |  |  |  |  |  |  | 5.2 |  |  |
| $B_2O_3$ |  |  | 25.9 | 16.3 | . | 15.3 | 15.4 | 14.9 | 15.1 | 4.9 |
| $Al_2O_3$ |  |  | 4.4 | 2.9 | 1.0 | 2.7 | 1.0 | 2.6 | 2.6 | 1.3 |
| $PbO$ | 40.0 | 36.0 |  | 31.5 | 33.6 | 28.4 | 27.8 | 25.0 | 27.7 | 31.3 |
| $BaO$ |  |  | 0.5 |  |  |  |  |  |  |  |
| $CaO$ |  |  | 5.1 |  |  |  |  |  |  |  |
| $ZnO$ |  |  | 24.0 |  |  |  |  |  |  |  |
| $Li_2O$ |  | 7.8 |  |  |  | 7.2 | 7.2 | 7.0 | 10.8 |  |
| $Na_2O$ |  |  | 9.7 |  |  |  |  |  |  |  |

In the thick film resistor composition of the present invention, the above-listed glasses can be used as the inorganic binder. If there is used a mixture of a first glass containing 30-60 wt. % of $SiO_2$, 5-30 wt. % of CaO, 1-40 wt. % of $B_2O_3$, 0-50 wt. % of PbO, and 0-20 wt. % of $Al_2O_3$, in which the total amount of the $SiO_2$, CaO, $B_2O_3$, PbO and $Al_2O_3$ accounts for 95 wt. % or more of the first glass, and a second glass comprising PbO-$SiO_2$ glass in which PbO accounts for at least 50 wt. % of the glass, favorable effects can be obtained, i.e., the ESD and the surface condition of the thick film resistor are improved, the length effect of its TCR is minimal, and changes in the resistance and TCR due to the calcination of the overcoat glass are also small. The smallness of the resistance and the length effect of the TCR means the smallness of changes in the resistance and TCR responsive to the change of the pad length (width) of the resistor, say, from 0.8 mm x 0.8 mm to 0.5 mm x 0.5 mm.

The aforementioned first glass contains only up to 50 wt. % of lead oxide, and so it is generally glass with a high softening point. The second glass contains at least 50 wt. % of lead oxide, and so it is generally glass with a low softening point.

The first glass and the second glass each cannot be used alone as a glass binder or the thick film resistor composition because the former glass does not sinter, while the latter is too soft as glass, making the resistor ill-shaped. By mixing such glasses, considered unusable alone, the present invention has achieved a thick film resistor with a minimal length effect of TCR and with small changes in resistance and TCR due to calcination of the overcoat glass. This has been quite unpredictable.

The first glass is glass in which the total amount of $SiO_2$, CaO, $B_2O_3$, PbO and $Al_2O_3$ accounts for 95 wt. % or more of the glass. The amount of $SiO_2$ needs to be at least 30 wt. %. A smaller amount will result in the failure to obtain a sufficiently high softening point. However, the amount must be 60 wt. % or less. A larger amount than this may result in crystallized Si. The amount of CaO needs to be at least 5 wt. %, but has to be 30 wt. % or less. An amount in excess of 30 wt. % may cause Ca to be crystalized with other elements. The amount of $B_2O_3$ needs to be at least 1 wt. %, but should be 40 wt. % or less. An amount larger than it may lead to no glass formation. The amount of PbO must be 50 wt. % or less. An amount exceeding 50 wt. % will result in the failure to obtain a sufficiently high softening point. Preferably, it is 0-30 wt. %, more preferably 0-20 wt. %. The amount of $Si_2O_3$ must be 20 wt. % or less. An amount exceeding 20 wt. % will result in no glass formation. The preferred amount is 0-5 wt. %.

The first glass is used in a proportion of 5-35 wt. %, preferably 10-25 wt. %, based on the total weight of the composition containing the organic solids. If based on the total content of the inorganic solids, it is 7-50 wt. %, preferably 14-36 wt. %.

The second glass is PbO-$SiO_2$ glass with a PbO content of at least 50 wt. %. Only when the first glass is used in combination with the second glass is the reduction of the length effect of the resistor TCR and the reduction or changes in resistance and TCR due to the calcination of the overcoat glass exhibited.

6

The second glass is preferably one containing 50-80 wt. % of PbO, 10-35 wt. % of SiO$_2$, 0-10 wt. % of Al$_2$O$_3$, 1-10 wt. % of B$_2$O$_3$, 1-10 wt. % of CuO, and 1-10 wt. % of ZnO, the total content of the PbO, SiO$_2$, Al$_2$O$_3$, B$_2$O$_3$, CuO and ZnO being 95 wt. % or more of the glass. By mixing the second glass of this formulation and the aforementioned first glass, the length effect of TCR and changes in resistance and TCR due to calcination of the overcoat glass are minimized, and the sintering properties are are also improved.

The second glass is used in a proportion of 5-40 wt. %, preferably 10-35 wt. %, based on the total weight of the composition containing the organic medium. If based on the total content of the inorganic solid, it is 7-57 wt. %, preferably 14-50 wt. %.

The thick film resistor composition of the present invention may contain a third glass as a glass binder. The third glass is PbO-SiO$_2$ glass prepared such that its softening point is lower than that of the first glass, but higher than that of the second glass. For example, it has the formulation, 65.0 wt. % PbO, 34.0 wt. % SiO$_2$, and 1.0 wt. % Al$_2$O$_3$.

The third glass is used in a proportion of 0-30 wt. %, preferably 5-25 wt. %, based on the total weight of the composition containing the organic medium. If based on the total content of the inorganic solid, it is 0-43 wt. %, preferably 7-36 wt. %.

The glasses that are used as inorganic binders in the present invention, including the first, second and third glasses, may further contain less than 5 wt. % of components for regulating the thermal expansion coefficient of the thick film resistor and the maturing temperature of the glass binder. An ordinary substrate, 96% alumina ceramic, has a thermal expansion coefficient of 75 x 10$^{-7}$/$^\circ$C, and so the thermal expansion coefficient of the thick film resistor should preferably be lower than that. The thermal expansion coefficient can be regulated by adjusting the contents of silica, lead oxide and boron oxide. The incorporation of a small amount of an oxide of lithium, potassium or sodium may result in a regulated thermal expansion coefficient. Lithium oxide is advantageously incorporated in the glass binder component to a content of about 3 wt. %. The incorporation of Li$_2$O in the binder together with (a) small amount(s) of ZrO$_2$ and/or TiO$_2$ will provide a favorable effect in addition to the effect on the thermal expansion coefficient. ZrO$_2$ in an amount of up to about 4% enhances the resistance of the glass to dissolution in an alkali solution, while TiO$_2$ enhances the resistance of the glass to attack by an acid. When the glass is PbO-free zinc aluminoborosilicate glass, the incorporation of Na$_2$O can provide a favorable thermal expansion coefficient range.

The first, second and third glasses as glass binders can be produced by an ordinary glass manufacturing technique. Namely, they can be produced by mixing the desired component or their precursors, e.g., H$_3$BO$_3$ for B$_2$O$_3$, in the desired proportions, and heating the mixture to form a melt. As is well known in the art, the heating is performed to the peak temperature until the melt will become completely liquid and no gases will be generated. In the present invention, the peak temperature is in the range of from 1100 to 1500$^\circ$C, usually from 1200 to 1400$^\circ$C. Then, the melt is typically poured onto a cold belt or in cold running water for quenching. Then, the product is milled, if desired, to seduce its particle sizes.

More specifically these glasses can be produced by melting for 20 minutes to 1 hour at about 1200-1400$^\circ$C disposes in a platinum crucible in an electrically heated silicon carbide furnace. By treatment with a rotary or oscillation mill, the final particle sizes can be adjusted to 1-4 m$^2$/g. The oscillation mill treatment is carried out by placing an inorganic powder and alumina cylinder together with an aqueous medium in the container, and then oscillating the container for a specified period of time.

The thick film resistor composition of the present invention may further contain an inorganic additive such as Nb$_2$O$_5$. Nb$_2$O$_5$ contributes to the conductivity of the thick film resistor. The inorganic additive is used in a proportion of 0-10 wt. % based of the total weight of the compositions containing the organic medium, or 0-15 wt. % based on the total content of the inorganic solids.

These inorganic solids of the present invention are dispersed in the organic medium (vehicle) to make a printable composition paste. The organic medium is used in a proportion of 20-40 wt. %, preferably 25-35 wt. %, based on the total weight of the composition.

Any inert liquids can be used as vehicles. There may be used as the vehicle one of water and various organic liquids each containing or not containing thickening agents and/or stabilizers and/or other ordinary additives. Examples of the organic liquids usable are aliphatic alcohols, esters (e.g., acetates and propionates) of such alcohols, terpenes such as pine root oil or terpineol, and solutions of resins (e.g., polymethacrylates of lower alcohols or ethyl cellulose). In solvents (e.g., pine root oil and monobutyl ether of ethylene glycol monoacetate). In the vehicle may be contained volatile liquids for promoting rapid solidification after application to the substrate. Alternatively, the vehicle may be composed of such volatile liquids. The preferred vehicle is based on ethyl cellulose and $\beta$-terpineol.

The thick film resistor composition of the present invention can be prepared by a roll mill.

The resistor composition of the present invention can be printed as a film on a ceramic, alumina or other dielectric substrate by an ordinary method. Advantageously an alumina substrate is used, and the resistor composition is printed on a precalcined palladium-silver terminal.

Generally, a screen stencil technique can be used preferably. The resulting printed pattern is generally allowed to stand for leveling, and dried for about 10 minutes at an elevated temperature, say, 150°C. Then, it is calcined at a peak temperature of about 150°C in a belt furnace in air.

The following is a description of the testing methods for the various characteristics of the thick film resistor composition.

## (1) Method of preparing a thick film resistor composition paste

The vehicle is added to predetermined amounts of the inorganic solids, and the mixture is kneaded by a roll mill to make a paste.

## (2) Printing and calcination

A Pd/Ag thick film conductor is printed on a 1 inch x 1 inch (25 mm x 25 mm) 96% alumina substrate to.a dry film thickness of 18±2 $\mu$m, and is then dried for 10 minutes at 150°C.

Then, the thick film resistor composition paste is printed to a size of 0.8 mm x 0.8 mm or 0.5 mm x 0.5 mm. The thicknesses of the coating is such that the resulting dry film thickness will be 18±2 $\mu$m. The print is dried at 150°C for 10 minutes, and then heated in a belt furnace for calcination. The temperature profile of the belt furnace is such that the peak temperature of about 850°C is maintained for 10 minutes, followed by cooling. The calcination time is such that the period from the time when the temperature during heating has exceeded 100°C until the time when the temperature during cooling has become lower than 100°C is 30 minutes.

## (3) Measurement of resistance

The resistance is measured with a terminal-patterned probe using an autorange autobalance digital ohmmeter with a precision of 0.01%. Specifically, samples are laid on the terminal post in the chamber, and electrically connected with the digital ohmmeter. The temperature in the chamber is adjusted to 25°C and equilibrated. Then, each sample is measured for resistance, and the readings are recorded.

Then, the temperature in the chamber is raised to 125°C and equilibrates. Then, each sample is measured again for resistance, and the readings are recorded.

TCR is calculated from the following equation:

$$TCR = ((R_{125C} - R_{25C})/R_{25C}) \times 10000 \text{ ppm/°C})$$

## (4) Measurements of ESD

ESD at 5 kV ($ESD_{5kV}$) is determined by applying static electricity of 5 kV at 1 pulse to the 0.8 mm x 0.8 mm thick film resistor, measuring resistance after application ($R_{5kV}$) and calculating the percent change compares with the resistance before application ($R_{25C}$) from the following equation:

$$ESD_{5kV} = ((R_{5kV} - R_{25C})/R_{25C}) \times 100\%$$

ESD at 25 kV ($ESD_{25kV}$) is determined by applying static electricity of 25 kV at 1 pulse to the 0.5 mm x 0.5 mm thick film resistor, measuring resistance after application ($R_{25kV}$), and calculating the percent change compared with the resistance before application ($R_{25C}$) from the following equation:

$$ESD_{25kV} = ((R_{25kV} - R_{25C})/R_{25C}) \times 100\%$$

## (5) Measurement of noise and delta noise

Noise is measured with the RESISTOR NOISE TESTER (manufactured by QUANTECH Inc.).

Delta noise is expressed as the deviation of the noise of the measured sample from a straight line connecting the absolute values of the noises currently required of 1 k$\Omega$ and 10 k$\Omega$ on the market. Since the absolute value of noise is strongly correlated with the resistance, the standarized evaluation of delta noise is useful.

[Examples]

The thick film resistor compositions of Examples 1 to 11 were produced in the manner described below. Examples 6 to 11 represent the compositions of the present invention. These compositions of Examples 1 through 11 each contain 15.00 wt. % of a ruthenium oxide as a conducting component, 16.89 wt. % of glass A and 36.31 wt. % of glass B as inorganic binders, 1.80 wt. % of niobium oxide as an inorganic additive, and 30 wt. % of an organic medium.

The method of producing the resistor composition is as follows.

The eleven kinds of divided ruthenium oxide solids shown in Table 3 ($RuO_2$-1 to $RuO_2$-11) were produced using as the starting material divided ruthenium oxide solids with an average specific surface area of 50 $m^2$/g and an average crystallite size of 133 angstroms (hereinafter referred to as $RuO_2$-A).

$RuO_2$-1 was produced by heating $RuO_2$-A at 400°C for 2 hours.

$RuO_2$-2 was produced by heating $RuO_2$-A at 350°C for 2 hours.

$RuO_2$-3 was produced by heating $RuO_2$-A at 300°C for 1 hour.

$RuO_2$-4 is $RuO_2$-A as it is.

$RuO_2$-5 was produced by heating $RuO_2$-A at 300°C for 1 hour, and then shredding the dried product with a 200 mesh screen. About 100 wt. % of the $RuO_2$-5 was accounted for by ruthenium oxide solids with crystallite sizes of 250 angstroms or less.

$RuO_2$-6 was produced by heating $RuO_2$-A at 500°C for 2 hours, and then pulverizing it under the same conditions as for $RuO_2$-5. About 80 wt. % of the $RuO_2$-6 was accounted for by solids of ruthenium oxide with crystallite sizes of 350 angstroms or more.

$RuO_2$-7 was produced by heating $RuO_2$-A at 500°C for 2 hours, followed by performing pulverization treatment under the same conditions as for $RuO_2$-5.

$RuO_2$-8 was produced by heating $RuO_2$-A at 500°C for 2 hours, followed by performing pulverization treatment under the same conditions as for $RuO_2$-5 except that the wet ball milling time was 70 hours.

$RuO_2$-9 was produced by performing the pulverization treatment of $RuO_2$-2 under the same conditions as for $RuO_2$-5.

$RuO_2$-10 contains $RuO_2$-6 and $RuO_2$-5 at a weight ratio of 2:1, and was produced by mixing $RuO_2$-6 and $RuO_2$-5 at a weight ratio of 2:1.

$RuO_2$-11 contains $RuO_2$-6 and $RuO_2$-5 at a weight ratio of 1:2, and was produced by mixing $RuO_2$-6 and $RuO_2$-5 at a weight ratio of 1:2.

These ruthenium oxides were measured for the average specific surface area and the average crystallite size by the aforementioned methods. The average specific source areas and the average crystallite sizes of $RuO_2$-10 and $RuO_2$-11 are the measured values of the mixtures of $RuO_2$-5 and $RuO_2$-6 in the predetermined proportions. The results of measurements are shown in Table 3.

The formulations of glass A and glass B used as inorganic binders are revealed in Table 4. These glasses were produced by heat-melting the predetermined materials at 1000-1700°C for about 30 minutes to 5 hours depending on the formulation of the glass until the generation of gases would completely stop; then quenching the melt in water; and milling the quenched product to specific surface areas of about 2-5 $m^2$/g.

The organic medium is a mixture of 10-30 parts of ethyl cellulose and 90-70 parts of $\beta$-terpineol.

These components were formed into respective compositions, printed, calcined, and tested for characteristics in accordance with the testing methods described previously. For the calcined surface, the appearance of the resistor after calcination was visually observed. Then, the surface condition was globally evaluated as A, B or C (A: best, B: intermediate, C: worst) based on the smoothness of the resistor surface as well as the melted to sintered condition of the resistor on the conductor and the substrate. The results are shown in Table 3. The preferred values of resistance etc. in this kind of thick film resistor are: 1 kΩ±30%, more preferably 1 kΩ±20%, for resistance; 0±100 ppm/°C, more preferably 0±50 ppm/°C, for HTCR; -2 dB or less, more preferably -5 dB or less, for delta noise; 0±1%, more preferably 0±0.5%, for ESD$_{5kV}$; and 0±10%, more preferably 0±5%, for ESD$_{25kV}$.

## TABLE

| Example No. | 1 | 2 | 3 | 4 | 5 | 6 | 7 | 8 | 9 | 10 | 11 |
|---|---|---|---|---|---|---|---|---|---|---|---|
| Number of $RuO_2$ | | | | | | | | | | | |
| Average Surface area of $RuO_2$ ($M^2/g$) | 22.5 | 27.6 | 34.0 | 50.4 | 61.1 | 22.5 | 28.1 | 32.0 | 51.9 | 34.0 | 45.7 |
| Average crystallite size of $RuO_2$ (Å) | 206 | 162 | 154 | 133 | 151 | 379 | 226 | 207 | 166 | 355 | 273 |
| $R(\Omega/\square)$ | 1005 | 666 | 648 | 547 | 438 | 2559 | 1081 | 1236 | 427 | 1689 | 860 |
| HTCR (ppm/°C) | 204 | 163 | 143 | 8 | 66 | 1 | 81 | 24 | 112 | -17 | 32 |
| del NOISE (dB) | 4 | -1 | -2 | -5 | -9 | 2 | -2 | -3 | -8 | -2 | -5 |
| NOISE (dB) | --12 | -18 | -19 | -22 | -27 | -12 | -17 | -19 | -25 | -16 | -18 |
| ESD 5 kV(%) | -4.8 | -1.4 | -0.7 | -0.2 | -0.1 | -5.3 | -1.3 | -0.9 | 0.3 | -1.5 | -0.5 |
| ESD 25 kV (%) | -37.9 | -29.0 | -22.0 | -8.8 | -4.1 | -24.0 | -13.4 | -10.7 | -6.1 | -9.5 | -6.9 |
| Surface Condition | | | B | | C | A | | C | | A | B |

Table 4

| Kind of glass | Glass A | Glass B |
|---|---|---|
| PbO | - | 58.9 |
| $SiO_2$ | 55.0 | 29.2 |
| $Al_2O_3$ | 14.0 | 2.4 |
| $B_2O_3$ | 7.5 | 3.1 |
| CuO | - | 2.8 |
| ZnO | - | 2.6 |
| $Ag_2O$ | - | 1.0 |
| CaO | 21.5 | - |
| $TiO_2/Fe_2O_3$ | 0.5 | - |
| $M_2O$ M = K, Na | 0.5 | - |
| MgO | 1.0 | - |
| BaO | - | - |
| $ZrO_2$ | - | - |

The thick film resistor compositions of the present invention have been found to show improved ESDs upon comparisons of Examples 1 and 8 as well as Examples 2 and 9 using ruthenium oxides with almost the same average crystallite sizes and different average specific surface areas; comparisons of Examples 1 and 6, Examples 2 and 7, and Examples 4 and 9, using ruthenium oxides with almost the same average specific surface average and different average crystallite sizes; and a comparison of Examples 1 and 7 with almost the same values of resistance. As shown in Examples 1 and 7, the use of a ruthenium oxide within the scope of the present invention makes it possible to improve ESD and approach TCR to a desired value, while keeping resistance at a practically constant value.

Next, the results of Examples 5, 6, 10 and 11 indicate that Example 5 using $RuO_2$-5 with a large specific surface area and a small crystallite size gives a satisfactory ESD, but an unsatisfactory surface condition. Example 6 using $RuO_2$-6 with a small specific surface area and a large crystallite size, on the other hand, provides an improved surface condition, but a poor ESD. Namely, the absolute values of ESD are great; ESD at 25 kV, in particular, is as great as -24.0. By contrast, Examples 10 and 11 using, respectively, $RuO_2$-10 and $RuO_2$-11 with large average specific surface areas of more than 30 $m^2/g$ and large average crystallite sizes of more than 250 angstroms are superior in both of ESD and surface condition. A comparison between Examples 6 and 10, in particular, shows that the surface condition is comparable, but ESD, especially that at 25 kV, is -9.5 in Example 10, demonstrating Example 10 to be much better. In Examples 5, 6, 10 and 11, resistance and TCR are each in a nearly linear relationship with the average specific surface area and the average crystallite size of ruthenium oxide. The same is true for noise and delta noise.

A comparison of Examples 3, 8 and 10 with nearly equal average specific surface areas but different average crystallite sizes shows that Example 10 with an average crystallite size of more than 250 angstroms is satisfactory in both of ESD and surface condition, while Examples 3 and 8 with an average crystallite size of less than 250 angstroms do not satisfy both of good ESD and surface condition. These results indicate that the use of a ruthenium oxide with an average crystallite size of 250 angstroms or more gives a thick film resistor satisfactory in surface condition as well as ESD.

In Examples 3, 8 and 10, the average specific surface areas of ruthenium oxides are almost equal, but their average crystallite sises are different, thus providing different resistance and TCR. That is, as the average crystallite size increases, the resistance increases, and TCR has a tendency toward negativity. If the targeted value of resistance is set at 1 kΩ/□, Example 8 is favorable in terms of the balance between resistance and TCR; however, Example 8 gives a rough surface condition. Example 10 provides a slightly higher resistance, but is satisfactory in TCR and surface condition. These findings show that the selection of a ruthenium oxide somewhere between Examples 6 and 10 affords a desired thick film resistor with resistance, TCR and surface condition being well balanced.

Fig. 1 shows the relationships between the average specific surface areas and the average crystallite sizes of ruthenium oxides of Examples 1 to 11. In this drawing, the circular plots show the ruthenium oxides obtained by heating, while the triangular plots show the ruthenium oxides obtained by heating, followed by pulverization. The numbers in the drawing correspond to the numbers of Examples. Since, in addition to Examples 1 to 11, eleven kinds of ruthenium oxides were produced by heating and pulverization performed in the same way as in Examples 1 to 11, the data on them are also plotted in the drawing. With these ruthenium oxides other than in Examples 1 to 11, the various characteristics of thick film resistor compositions produced by using them showed the same tendencies as did Examples 1 to 11.

As has been described, the thick film resistor composition containing solids of ruthenium oxide in accordance with the present invention gives a thick film resistor with a satisfactory voltage endurance, controllable values of resistance and TCR, and a good surface condition.

## Claims

1. A thick film resistor composition comprising: 5-25 wt. % of divided solids of ruthenium oxide as a conducting component and 30-70 wt. % of glass as an inorganic binder, wherein said divided solids of ruthenium oxide have an average specific surface area of 30 $m^2/g$ or more and an average crystallite size of 160 angstroms or more or have an average specific surface area of 18 $m^2/g$ or more but less than 30 $m^2/g$ and an average crystallite size of 220 angstroms or more.

2. The thick film resistor composition as claimed in Claim 1 further includes up to 20 wt. % of ruthenium pyrochlore as the conducting component.

3. The thick film resistor composition as claimed in Claim 1 or 2, wherein said divided solids have an average specific surface area of 30 $m^2/g$ or more and an average crystallite size of 220 angstroms or more.

4. The thick film resistor composition as claimed in Claim 3, wherein said divided solids of ruthenium oxide include, based on 100 wt. % of the whole divided ruthenium oxide, 30-70 wt. % of solids of ruthenium oxide with a specific surface area of 30 $m^2/g$ or less and a crystallite size of 350 angstroms or more and 70-30 wt. % of solids of ruthenium oxide with a specific surface area of 50 $m^2/g$ or more and a crystallite size of 250 angstroms or less.

5. The thick film resistor composition as claimed in Claims 3 or 4, wherein said divided solids of ruthenium oxide include, based on 100 wt. % of the whole divided ruthenium oxide, 30-70 wt% of a first solids of ruthenium oxide with an average specific surface area of 30 $m^2/g$ or less and an average crystallite size of 350 angstroms or more and 70-30 wt. % of a second solids of ruthenium oxide with an average specific surface area of 50 $m^2/g$ or more and an average crystallite size of 250 angstroms or less.

6. The composition of Claim 1 in which the ruthenium oxide is ruthenium pyrochlore.

7. The inorganic binder of Claim 1 comprising a mixture of a first glass of 30-60 wt. % of $SiO_2$, 5-30 wt. % CaO, 1-40 wt. % $B_2O_3$, 0-50 wt. % PbO, 0-20 wt. % $Al_2O_3$ and mixtures thereof in which the total amount of $SiO_2$, CaO, $B_2O_3$, PbO and $Al_2O_3$ is at least 95 wt. % of the first glass and a second glass of PbO-$SiO_2$ and mixtures thereof in which PbO is at least 50 wt. % of the second glass.

8. The composition of Claim 7 in which a third glass is 0-43 wt. % PbO-$SiO_2$ prepared so its softening point is lower than the first glass but higher than the second glass.

9. The composition of Claim 7 comprising an oxide of lithium, potassium or sodium.

10. The composition of Claim 7 comprising 0-15 wt. % $Nb_2O_5$.

11. The composition of Claim 7 comprising ethyl cellulose and $\beta$-terpineol.

FIG.1